# FASCICULE DE BREVET EUROPEEN

(11) **EP 1 868 349 B1**
(45) Date de publication et mention de la délivrance du brevet: **13.04.2011**
(21) Numéro de dépôt: 07290713.2
(22) Date de dépôt: 08.06.2007
(51) Int. Cl.: H04L 29/06

(54) **Dispositif de mise en communication de réseaux locaux par un commutateur exclusif et systéme de mise en communication correspondant ainsi qu'un support d'informations et un programme d'ordinateur**
Vorrichtung zur Verbindung von lokalen Netzwerken über einen Exklusivschalter und entsprechendes Verbindungssystem sowie ein Datenträger und ein Computerprogramm
Device for establishing communication between local area networks by an exclusive switch and corresponding system for establishing communication as well as a data medium and a computer program

(30) Priorité: 16.06.2006 FR 0605370
(43) Date de publication de la demande: 19.12.2007
(73) Titulaire: Alcatel Lucent, 75008 Paris (FR); SAGEM DEFENSE SECURITE, 75015 Paris (FR)
(72) Inventeur: Clevy, Laurent, 91460 Marcoussis (FR); Cosson, Laurent, 91460 Marcoussis (FR); Muller, Claude, 75015 Paris (FR)
(74) Mandataire: Fruchard, Guy

(56) Documents cités:
- EP-A- 1 657 880
- US-A1- 2002 093 915
- US-A1- 2003 135 753
- US-A1- 2003 145 118
- US-A1- 2006 129 792

## Description

La présente invention concerne un procédé de mise en communication de réseaux locaux comportant des portions de réseau local de catégories différentes, et un système de mise en communication de portions de réseaux locaux appartenant à des catégories différentes, ainsi qu'un support d'informations et un programme d'ordinateur.

### ARRIERE PLAN DE L'INVENTION

On connaît le développement extraordinaire des réseaux assurant une communication entre différents ordinateurs.

Afin de permettre une séparation entre différents groupes d'utilisateurs, soit en raison de différents niveaux de confidentialité des informations auxquelles différents groupes d'utilisateurs peuvent avoir accès, soit d'une façon plus générale pour permettre un accès dédié à des informations selon des catégories différentes les unes des autres, il est connu d'utiliser des réseaux locaux dédiés dans lesquels les différents ordinateurs formant un réseau local sont reliés entre eux par des liaisons dédiées et cloisonnées. Une telle solution est très onéreuse en matériel et très complexe à mettre en oeuvre lors d'une extension ou d'un déport d'une partie du réseau dédié en raison de l'implantation nécessaire de nouvelles lignes dédiées ou de la connexion des lignes existantes pour réaliser un réseau dédié.

Il est également connu de réaliser des réseaux dédiés en implantant des logiciels dans les routeurs utilisés pour le fonctionnement d'un réseau ayant différentes applications. Toutefois, en raison de la complexité des logiciels de routage, en particulier lorsqu'ils sont destinés à gérer un très grand nombre d'utilisateurs à débit élevé, il n'est pas possible de garantir une séparation effective totale des communications entre des réseaux locaux de catégories différentes. Or la transmission de messages à des utilisateurs auxquels ces messages ne sont pas destinés peut dans certains cas avoir une importance considérable.

Le document US 2006/0129792 enseigne une solution pour sécuriser un réseau unique réparti sur deux sites reliés par un réseau de transit commun, où chaque paquet de donnée issu d'un site est encrypté avant d'être tranféré sur le réseau de transit non sécurisé.

Le document US 2003/0145118 décrit une solution dans laquelle les réseaux locaux de deux sites sont mis en communication par un réseau de transit commun et dans laquelle la séparation entre les différentes catégories est assurée en implémentant un encryptage des paquets.

### OBJET DE L'INVENTION

Un but de l'invention est de proposer un procédé de mise en communication de réseaux locaux et le système de mise en communication correspondant permettant d'effectuer une séparation fiable entre des portions de réseaux locaux tout en mettant en oeuvre des moyens moins onéreux que dans l'art antérieur.

### RESUME DE L'INVENTION

En vue de la réalisation de ce but, on propose selon l'invention un procédé de mise en communication de réseaux locaux dont l'un au moins comporte des portions de réseau local de catégories différentes les unes des autres, la communication étant effectuée selon une transmission par paquets, chaque paquet comportant un champ de données et un en-tête comportant un champ d'adresses, le procédé comportant les étapes d'introduire dans un champ d'en-tête de chaque paquet une information de catégorie à laquelle appartient une portion de réseau local émetteur dont le paquet est issu, de détecter l'information de catégorie d'un paquet au moment d'une introduction du paquet sur un réseau de transport commun, d'établir une liaison physique exclusive entre une portion du réseau local émetteur et le réseau de transport commun en fonction de l'information de catégorie et d'assurer une sécurisation du champ d'information de catégorie avant l'introduction du paquet sur le réseau de transport commun.

Ainsi, la réalisation d'une liaison physique exclusive évite tout risque d'une transmission incontrôlée d'un paquet dans une portion de réseau local de catégorie non souhaitée et l'utilisation d'un réseau de transport commun permet de réaliser à moindre coût une liaison déportée à grande distance, la protection de la transmission dans le réseau de transport commun pouvant être effectuée en utilisant des moyens de sécurisation propres au réseau de transport commun.

En outre il n'est pas nécessaire de configurer à priori le réseau récepteur, puisque chaque message indique clairement le réseau ou son niveau à accéder : on a donc une configuration dynamique qui s'auto configure en fonction des messages reçus.

Dans le cas de portions de réseaux locaux hiérarchisées selon différents niveaux de confidentialité, la sécurisation des paquets est de préférence adaptée au niveau de confidentialité.

### BREVE DESCRIPTION DES DESSINS

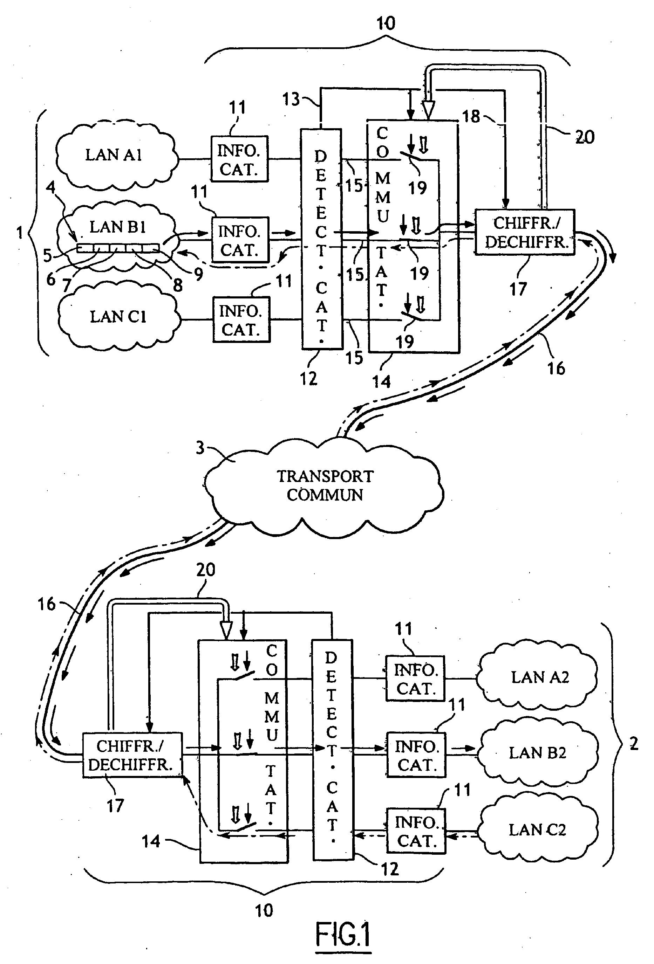

D'autres caractéristiques et avantages de l'invention apparaîtront à la lecture de la description qui suit d'un mode de mise en oeuvre particulier non limitatif du procédé selon l'invention, en référence à la figure unique ci-jointe qui est une représentation schématique d'un système de mise en communication de portions de réseaux locaux selon l'invention.

### DESCRIPTION DETAILLEE DE L'INVENTION

En référence à la figure, le procédé et le système de mise en communication selon l'invention sont destinés à permettre une liaison totalement sécurisée entre une portion d'un premier réseau local 1 et une portion d'un second réseau local 2. Dans le mode de réalisation illustré, le premier réseau local 1 comporte trois portions de réseau local LAN A1, LAN B1 et LAN C1. Les portions de réseaux locaux sont physiquement séparées les unes des autres et correspondent à des catégories différentes les unes des autres. Par exemple la portion LAN A1 est une portion réservée à des communications de confidentialité élevée, la portion LAN B1 est réservée à des communications de confidentialité moyenne et la portion LAN C1 est réservée à des communications de confidentialité faible. De même le second réseau local 2 comporte des portions de réseau local de catégories différentes LAN A2, LAN B2 et LAN C2 qui correspondent aux catégories du premier réseau local 1.

Selon l'invention, on cherche à mettre les portions de réseau locaux en communication en utilisant un réseau de transport commun 3, ce réseau étant non seulement commun aux différentes portions de réseaux locaux mais pouvant également être relié à d'autres utilisateurs selon un protocole connu en soi, par exemple un protocole TCP/IP assurant une transmission par paquets 4. Dans le mode de mise en oeuvre illustré, le système fonctionne selon la norme IPsec. A cet effet chaque paquet 4 comporte un en-tête comprenant un champ 5 pour recevoir les adresses émetteur et destinataire, un champ 6 contenant un en-tête d'authentification faisant partie de la norme IPsec et servant à assurer l'authenticité et l'intégrité du paquet. Chaque paquet 4 comprend un champ 8 pour les données. Si le service de confidentialité est activé, le paquet 4 comporte alors un champ 7 recevant les données de sécurité d'encapsulation et le champ 8 comporte une forme protégée des données. Dans le cas où la confidentialité n'est pas requise, le champ 7 est absent et le champ 8 contient les données en clair. Dans tous les cas un champ 9 est présent qui reçoit une signature garantissant l'intégrité du paquet 4.

Selon l'invention, la liaison entre les réseaux locaux et le réseau de transport commun est assurée par un dispositif de liaison 10 comportant successivement dans le sens montant trois organes 11 d'introduction d'information de catégorie, chacun associé à une des portions de réseau local et destiné à introduire dans l'en-tête d'authentification une information de catégorie sur la portion de réseau local de l'émetteur. Le dispositif de liaison 10 comporte ensuite un détecteur de catégorie 12 qui assure la commande (illustrée par la flèche en trait épais 13) d'un commutateur 14 qui assure une liaison physique exclusive entre l'une des lignes 15 associée à l'une des portions de réseau local, LAN B1 dans l'exemple illustré, et la ligne de liaison 16 avec le réseau de transport commun 3. Cette liaison physique est réalisée par exemple par des interrupteurs électroniques 19 dont l'un est fermé et les autres sont ouverts selon la commande effectuée par un circuit logique inclus dans le commutateur 14 et utilisant l'information de catégorie du paquet 4 en cours de transmission. Le dispositif de liaison 10 comporte en outre un organe de chiffrement/déchiffrement 17 qui, selon le mode de réalisation préféré illustré, est également relié à l'organe de détection de catégorie 12 (selon une commande symbolisée par une flèche 18) pour assurer un chiffrement des données en fonction de la catégorie de la portion de réseau local à partir de laquelle le paquet considéré est émis.

Le procédé de mise en oeuvre de l'invention a été illustré dans le sens montant à partir du réseau 1 vers le réseau de transport commun puis descendant vers le réseau local 2 au moyen de flèches en trait continu, c'est-à-dire que l'information de catégorie est introduite dans le champ d'en-tête d'authentification 6 par l'organe d'introduction 11 puis cette information de catégorie est détectée par l'organe de détection 12 qui commande la fermeture de l'interrupteur électronique correspondant 19 tandis que les deux autres interrupteurs électroniques 19 sont maintenus ouverts pour isoler les autres lignes de liaison 15. Le chiffrement des données et l'encapsulation des paquets sont assurés par l'organe de chiffrement 17 et le paquet est acheminé à travers le réseau de transport commun 3 et atteint le dispositif de liaison 10 associé au réseau local 2. Chaque paquet est désencapsulé et déchiffré dans l'organe de chiffrement/déchiffrement 17 correspondant et une lecture de l'en-tête d'authentification permet d'effectuer une commande (symbolisée par la flèche en trait double 20) du commutateur 14 pour assurer une liaison avec la portion de réseau local correspondante, en l'espèce la portion LAN B2.

La communication peut s'établir non seulement entre des portions de réseaux locaux de même catégorie comme décrit ci-dessus mais dans le cas de catégories correspondant à des niveaux de confidentialité, il est également possible d'établir des règles permettant d'envoyer un paquet non seulement dans une portion de réseau de même niveau de confidentialité mais également dans une portion de réseau de niveau de confidentialité supérieur à celui défini par l'information de catégorie contenue dans l'en-tête d'authentification. Cette mise en oeuvre est illustrée sur la figure par des flèches en trait mixte dans le sens montant depuis le réseau local 2. Un paquet émis par la portion de réseau local LAN C2 est ainsi transmis à la portion de réseau local LAN B1. On notera que dans ce cas il est nécessaire de prévoir à un point de la chaîne de transmission une prise en compte d'une information permettant de commander le commutateur 14 associé au réseau local 1 de façon que celui réalise une liaison avec la portion de réseau local LAN B1 et non la portion de réseau local LAN C1. Cette information complémentaire peut être l'adresse du destinataire en prévoyant une fonction de routage associée à l'organe de chiffrement/-déchiffrement 17.

L'invention est de préférence mise en oeuvre au moyen d'un programme d'ordinateur comportant des instructions exécutables lorsque le programme est chargé sur un système informatique. A cet effet, l'invention concerne également un support d'informations lisible par un système informatique, éventuellement amovible, totalement ou partiellement, notamment CD-ROM ou support magnétique, tel un disque dur ou une disquette, ou support transmissible, tel un signal électrique ou optique, comportant des instructions d'un programme ordinateur permettant la mise en oeuvre du procédé selon l'invention lorsque ce programme est chargé dans un système informatique et exécuté par celui-ci.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été décrite avec deux réseaux locaux comportant chacun trois portions de réseau local selon des niveaux hiérarchisés, l'invention peut être mise en oeuvre avec des réseaux locaux comportant un nombre quelconque de portions de réseau y compris une seule portion de réseau, le dispositif de liaison 10 servant alors à assurer un contrôle physique de l'accès au réseau local. On notera à ce propos que l'information de catégorie peut être introduite dans les paquets par chaque ordinateur branché sur la portion de réseau local considérée.

On remarquera également que le dispositif selon l'invention permet une liaison sécurisée particulièrement simple en raison de la relation directe entre la commande du commutateur et l'information de catégorie. L'information de catégorie peut être considérée comme une information de commande dédiée qui remplace la liaison dédiée qui était jusqu'à présent établie entre des portions de réseau local de même catégorie.

Selon la norme IPsec l'intégrité de tous les champs d'un paquet est garantie par la signature. L'invention peut également être mise en oeuvre avec une norme de sécurité qui assure une sécurité différentiée selon la catégorie.

## Revendications

1. Procédé de mise en communication de réseaux locaux (1, 2) dont l'un au moins comporte des portions de réseau local de catégories différentes les unes des autres, la communication étant effectuée selon une transmission par paquets (4), chaque paquet comportant un champs de données et un en-tête comportant un champ d'adresses (5), **caractérisé en ce qu'**il comporte les étapes d'introduire dans un champ (6) de l'en-tête de chaque paquet une information de catégorie à laquelle appartient une portion de réseau local émetteur dont le paquet est issu, de détecter (12) l'information de catégorie d'un paquet au moment d'une introduction du paquet sur un réseau de transport commun (3), d'établir une liaison physique exclusive entre la portion du réseau local émetteur et le réseau de transport commun en fonction de l'information de catégorie, et d'assurer une sécurisation du champ d'information de catégorie avant l'introduction du paquet sur le réseau de transport commun.

2. Procédé selon la revendication 1, **caractérisé en ce qu'**il comporte en outre les étapes de détecter à nouveau l'information de catégorie au moment de la sortie du paquet à partir du réseau de transport commun vers un réseau local destinataire (2) comportant des portions de réseau local de catégories différentes les unes des autres, et d'effectuer une liaison physique exclusive entre le réseau de transport commun (3) et une portion du réseau local destinataire en fonction de l'information de catégorie du paquet.

3. Procédé selon la revendication 2, **caractérisé en ce que** les catégories correspondent à des niveaux de confidentialité et **en ce que** la portion (LAN B1) de réseau local destinataire mise en liaison avec le réseau de transport commun (3) est une portion ayant un niveau de confidentialité égal ou supérieur à l'information de catégorie de la portion (LAN C2) du réseau local émetteur.

4. Procédé selon la revendication 1, **caractérisé en ce que** l'information de catégorie est introduite dans chaque paquet (4) immédiatement avant la transmission au réseau de transport commun.

5. Procédé selon la revendication 1, **caractérisé en ce qu'**il comporte en outre l'étape d'effectuer un chiffrement des données et de l'information de catégorie à l'entrée dans le réseau de transport commun et un déchiffrement à la sortie du réseau de transport commun.

6. Support d'informations lisible par un système informatique, éventuellement amovible, totalement ou partiellement, notamment CD-ROM ou support magnétique, tel un disque dur ou une disquette, ou support transmissible, tel un signal électrique ou optique, **caractérisé en ce qu'**il comporte des instructions d'un programme ordinateur permettant la mise en oeuvre d'un procédé selon l'une quelconque des revendications 1 à 5, lorsque ce programme est chargé dans un système informatique et exécuté par celui-ci.

7. Programme d'ordinateur stocké sur un support d'informations, ledit programme comportant des instructions permettant la mise en oeuvre d'un procédé selon l'une quelconque des revendications 1 à 5, lorsque ce programme est chargé dans un système informatique et exécuté par celui-ci.

8. Système de mise en communication de portions de réseaux locaux appartenant à au moins deux catégories différentes l'une de l'autre, la communication étant effectuée selon une transmission par paquets (4), chaque paquet comportant un champ de données (8) et un champ d'en-tête (6) adapté à recevoir une information de catégorie, **caractérisé en ce qu'**il comporte un dispositif de liaison (10) comprenant un organe de détection (12) de l'information de catégorie d'un paquet en cours de transmission, cet organe de détection (12) étant relié à un commutateur (14) établissant une liaison physique exclusive entre deux lignes de transmission (15, 16) en fonction de l'information de catégorie contenue dans le paquet (4) en cours de transmission.

9. Système selon la revendication 8, **caractérisé en ce que** le dispositif de liaison (10) comporte un organe (11) d'introduction de l'information de catégorie associé à chaque portion de réseau local.

10. Système selon la revendication 8, **caractérisé en ce que** le dispositif de liaison (10) comporte un organe de chiffrement/déchiffrement (17) associé à l'organe de détection de catégorie (12).

11. Système selon la revendication 8, **caractérisé en ce que** la communication est établie par l'intermédiaire d'un réseau de transport commun (3) et **en ce que** le système comporte un dispositif de liaison (10) entre le réseau de transport commun et chaque réseau local (1, 2) .

## Claims

1. A method of putting into communication local networks (1, 2) including at least one having local network portions of mutually different categories, communication being performed by transmitting packets (4), each packet having a data field and a header including an address field (5), the method being **characterized in that** it includes the steps: of inserting category information into a field (6) of the header of each packet, the category being that of an emitting local network portion from which the packet comes; of detecting (12) the category information of a packet at the time the packet is introduced to a common transport network (3); of establishing an exclusive physical link between the emitting local network portion and the common transport network as a function of the category information; and of ensuring the category information field is secure before introducing the packet to the common transport network.

2. A method according to claim 1, **characterized in that** it further includes the steps: of detecting once more the category information at the time the packet exits from the common transport network to a destination local network (2) including local network portions of mutually different categories; and of establishing an exclusive physical link between the common transport network (3) and a destination local network portion as a function of the packet category information.

3. A method according to claim 2, **characterized in that** the categories correspond to levels of confidentiality, and **in that** the destination local network portion (LAN B1) put into communication with the common transport network (3) is a portion having a confidentiality level that is equal to or greater than that of the category information for the emitting local network portion (LAN C2).

4. A method according to claim 1, **characterized in that** the category information is introduced into each packet (4) immediately prior to transmission to the common transport network.

5. A method according to claim 1, **characterized in that** it further includes the steps: of encrypting data and category information on entry into the common transport network; and of decrypting it on exit from the common transport network.

6. A data medium readable by a computer system, the medium optionally being removable, in full or in part, and in particular being a CD-ROM or a magnetic medium such as a hard disk or a floppy disk, or a transmission medium such as an electrical or optical signal, the medium being **characterized in that** it includes computer program instructions enabling a method according to any one of claims 1 to 5 to be implemented when the program is loaded into a computer system and executed thereby.

7. A computer program stored on a data medium, said program including instructions enabling a method according to any one of claims 1 to 5 to be implemented when the program is loaded in a computer system and executed thereby.

8. A system for putting into communication local network portions belonging to at least two mutually different categories, communication being performed by transmitting packets (4), each packet having a data field (8) and a header field (6) adapted to receive category information, the system being **characterized in that** it includes a link device (10) having a detector member (12) for detecting the category information of a packet being transmitted, the detector member (12) being connected to a switch (14) for establishing an exclusive physical link between two transmission lines (15, 16) as a function of the category information contained in the packet (4) being transmitted.

9. A system according to claim 8, **characterized in that** the link device (10) includes a member (11) for introducing the category information associated with each local network portion.

10. A system according to claim 8, **characterized in that** the link device (10) includes an encryption/decryption member (17) associated with the category detector member (12).

11. A system according to claim 8, **characterized in that** communication is established via a common transport network (3), and **in that** the system includes a link device (10) between the common transport network and each local network (1, 2).

## Patentansprüche

1. Verfahren zum Verbinden von lokalen Netzwerken (1, 2), von denen mindestens eines Abschnitte eines lokalen Netzwerks mit zueinander unterschiedlichen Kategorien umfasst, wobei die Kommunikation gemäß einer Übertragung über Pakete (4) erfolgt, wobei jedes Paket ein Datenfeld und einen Kopf umfasst, der ein Adressfeld (5) umfasst, **dadurch gekennzeichnet, dass** es die Schritte umfasst: Einfügen einer Information über die Kategorie, zu der ein Abschnitt eines sendenden lokalen Netzwerkes gehört, von dem das Paket stammt, in ein Kopffeld (6) jedes Pakets, Erfassen (12) der Kategorie-Information eines Pakets zum Zeitpunkt eines Einfügens des Pakets in ein gemeinsames Transportnetzwerk (3), Herstellen einer exklusiven physikalischen Verbindung zwischen dem Abschnitt des sendenden lokalen Netzwerks und dem gemeinsamen Transportnetzwerk in Abhängigkeit von der Kategorie-Information, und Gewährleisten einer Sicherung des Kategorie-Informationsfeldes vor dem Einfügen des Pakets in das gemeinsame Transportnetz.

2. Verfahren nach Anspruch 1, **dadurch gekennzeichnet, dass** es ferner die Schritte umfasst: erneutes Erfassen der Kategorie-Information zum Zeitpunkt des Austritts des Pakets aus dem gemeinsamen Transportnetzwerk in Richtung eines als Ziel bestimmten lokalen Netzwerks (2), das Abschnitte eines lokalen Netzwerks mit zueinander unterschiedlichen Kategorien umfasst, und Herstellen einer exklusiven physikalischen Verbindung zwischen dem gemeinsamen Transportnetzwerk (3) und einem Abschnitt des als Ziel bestimmten lokalen Netzwerks in Abhängigkeit von der Kategorie-Information des Pakets.

3. Verfahren nach Anspruch 2, **dadurch gekennzeichnet, dass** die Kategorien Vertraulichkeitsniveaus entsprechen und dass der Abschnitt (LAN B1) des als Ziel bestimmten lokalen Netzwerks, der mit dem gemeinsamen Transportnetzwerk (3) verbunden ist, ein Abschnitt ist, der ein Vertraulichkeitsniveau hat, das gleich oder über der Kategorie-Information des Abschnittes (LAN C2) des sendenden lokalen Netzwerkes ist.

4. Verfahren nach Anspruch 1, **dadurch gekennzeichnet, dass** die Kategorie-Information in jedes Paket (4) unmittelbar vor der Übertragung zu dem gemeinsamen Transportnetz eingefügt wird.

5. Verfahren nach Anspruch 1, **dadurch gekennzeichnet, dass** es ferner den Schritt des Durchführens einer Verschlüsselung der Daten und der Kategorie-Information am Eingang in das gemeinsame Transportnetz und einer Entschlüsselung am Ausgang des gemeinsamen Transportnetzes umfasst.

6. Informationsträger, der von einem Informatiksystem gelesen werden kann und möglicherweise ganz oder teilweise auswechselbar ist, insbesondere eine CD-ROM oder ein Magnetträger, wie z. B. eine Festplatte oder eine Diskette, oder übertragbarer Träger, wie z. B. ein elektrisches oder optisches Signal, **dadurch gekennzeichnet, dass** er Anweisungen eines Computerprogramms umfasst, die das Durchführen eines Verfahrens nach einem der Ansprüche 1 bis 5 ermöglichen, wenn dieses Programm in ein Informatiksystem geladen und von demselben ausgeführt wird.

7. Computerprogramm, das auf einem Informationsträger gespeichert ist, wobei das genannte Programm Anweisungen umfasst, die das Durchführen eines Verfahrens nach einem der Ansprüche 1 bis 5 ermöglichen, wenn dieses Programm in ein Informatiksystem geladen und von demselben ausgeführt wird.

8. System zum Verbinden von Abschnitten lokaler Netzwerke, die zu mindestens zwei zueinander unterschiedlichen Kategorien gehören, wobei die Kommunikation gemäß einer Übertragung durch Pakete (4) erfolgt, wobei jedes Paket ein Datenfeld (8) und ein Kopffeld (6) umfasst, das dazu geeignet ist, eine Kategorie-Information aufzunehmen, **dadurch gekennzeichnet, dass** es eine Verbindungsvorrichtung (10) umfasst, die ein Detektionselement (12) zum Erfassen der Kategorie-Information eines Pakets während der Übertragung umfasst, wobei dieses Detektionselement (12) mit einem Schalter (14) verbunden ist, der eine exklusive physikalische Verbindung zwischen zwei Übertragungsleitungen (15, 16) in Abhängigkeit von der Kategorie-Information herstellt, die in dem Paket (4) während der Übertragung enthalten ist.

9. System nach Anspruch 8, **dadurch gekennzeichnet, dass** die Verbindungsvorrichtung (10) ein Einfügeelement (11) zum Einfügen der Kategorie-Information umfasst, die jedem Abschnitt eines lokalen Netzwerks zugeordnet ist.

10. System nach Anspruch 8, **dadurch gekennzeichnet, dass** die Verbindungsvorrichtung (10) ein Verschlüsselungs-/Entschlüsselungselement (17) umfasst, das mit dem Kategorie-Detektionselement (12) verbunden ist.

11. System nach Anspruch 8, **dadurch gekennzeichnet, dass** die Kommunikation über ein gemeinsames Transportnetz (3) hergestellt wird und dass das System eine Verbindungsvorrichtung (10) zwischen dem gemeinsamen Transportnetz und jedem lokalen Netzwerk (1, 2) umfasst.
